# EUROPÄISCHE PATENTSCHRIFT

(11) **EP 3 390 983 B1**
(45) Veröffentlichungstag und Bekanntmachung des Hinweises auf die Patenterteilung: **25.08.2021**
(21) Anmeldenummer: 16805796.6
(22) Anmeldetag: 02.12.2016
(51) Int. Cl.: G01F 23/296

(54) **VIBRONISCHER SENSOR UND MESSANORDNUNG ZUM ÜBERWACHEN EINES FLIESSFÄHIGEN MEDIUMS**
VIBRONIC SENSOR AND MEASURING ASSEMBLY FOR MONITORING A FLOWABLE MEDIUM
CAPTEUR VIBRONIQUE ET ENSEMBLE DE MESURE POUR SURVEILLER UN MILIEU COULANT

(30) Priorität: 17.12.2015 DE 102015122124
(43) Veröffentlichungstag der Anmeldung: 24.10.2018
(73) Patentinhaber: Endress+Hauser SE+Co. KG, 79689 Maulburg (DE)
(72) Erfinder: BERLINGER, Andrea, 76532 Baden-Baden (DE); BUSCHKE, Ingo, 79689 Maulburg (DE); HUBER, Christof, 3007 Bern (CH); KLÖFER, Peter, 79585 Steinen (DE); LOPATIN, Sergej, 79540 Lörrach (DE); PECHSTEIN, Torsten, 01445 Radebeul (DE); UEHLIN, Thomas, 79650 Schopfheim (DE)
(74) Vertreter: Andres, Angelika Maria
(86) Internationale Anmeldenummer: PCT/EP2016/079523
(87) Internationale Veröffentlichungsnummer: WO 2017/102370

(56) Entgegenhaltungen:
- EP-A1- 2 667 162
- DE-A1-102006 033 819
- DE-A1-102011 075 113

## Beschreibung

Die vorliegende Erfindung betrifft einen vibronischen Sensor und eine Messanordnung zum Überwachen eines fließfähigen Mediums. Fließfähige Medien werden in Prozessanlagen oft mit Hilfe von vibronischen Sensoren überwacht, welche als Grenzstandschalter bzw. Dichte- oder Viskositätsmesser eingesetzt werden. Ein Grenzstandschalter umfasst einen Oszillator, beispielsweise in Form eines Stabs oder einer Schwinggabel und detektiert die Anwesenheit eines Mediums über eine Änderung der Resonanzfrequenz des Oszillators aufgrund der Dichte des umgebenden Mediums. Weiterhin kann durch Messung der Resonanzfrequenz des Oszillators die Dichte bzw. durch die Dämpfung die Viskosität des Mediums bestimmt werden. Derartige vibronische Sensoren werden von der Anmelderin unter der Bezeichnung Liquiphant vertrieben.

Die Offenlegungsschrift DE 33 36 991A1 offenbart einen solchen vibronischen Sensor zum Überwachen eines Füllstands, wobei der Oszillator des Sensors zwei ins Medium ragende Schwingstäbe aufweist, die mit einem Piezostapel zu Biegeschwingungen angeregt werden.

Die Offenlegungsschrift DE 100 57 974 A1 offenbart einen vibronischen Sensor und ein Betriebsverfahren dafür zur Überwachung des Füllstandes eines Mediums bzw. zur Ermittlung der Dichte des Mediums. Der Einfluss von Störgrößen auf die Schwingfrequenz des Oszillators des vibronischen Sensors wird ermittelt und entsprechend kompensiert.

Die Offenlegungsschrift DE 100 50 299 A1 offenbart einen vibronischen Sensor zur Bestimmung der Viskosität eines Mediums in einem Behälter mit einem angeregten Oszillator, wobei anhand einer Frequenz-Phase-Kurve des Oszillators die Viskosität des Mediums bestimmt wird.

Die Offenlegungsschrift DE 10 2006 033 819 A1 offenbart einen vibronischen Sensor zum Bestimmen der Dichte eines Mediums, mit einer Anrege-/Empfangseinheit, welche einen Oszillator zu mechanischen Schwingungen anregt und welche die mechanischen Schwingungen empfängt, mit einer Elektronikeinheit, welche die Anrege-/Empfangseinheit mit einem elektrischen Anregesignal beaufschlagt und welche von der Anrege-/Empfangseinheit ein elektrisches Empfangsignal erhält, wobei die Elektronikeinheit das Anregesignal derartig erzeugt, dass sich zwischen dem Empfangssignal und dem Anregesignal eine Phasendifferenz gleich einem Phasendifferenzsollwert ergibt, bei welchem Auswirkungen von Änderungen der Viskosität des Mediums auf die mechanischen Schwingungen der mechanisch schwingfähigen Einheit vernachlässigbar sind, und der Phasendifferenzsollwert in Abhängigkeit vom Verhältnis der Impedanz der Anrege-/Empfangseinheit zur Eingangsimpedanz der Elektronikeinheit vorgegeben ist.

Die obigen vibronischen Sensoren und die eingesetzten Auswerteverfahren gehen bisher von einem ruhenden Medium aus, denen eine Relativbewegung zwischen dem Medium und dem Sensor als Freiheitsgrad, der durch den Sensor beachtet wird, nicht bekannt ist.

Die Veröffentlichung EP 2 667 162 A1 offenbart eine Vorrichtung zur Messung physikalischer Eigenschaften zweiphasiger Fluide, insbesondere gasbeladener Flüssigkeiten. Das Messprinzip der EP 2 667 162 A1 beruht darauf, dass Gase erheblich geringere Dichten und Viskositäten als Flüssigkeiten aufweisen. Wenn daher ein Oszillator mit einer Gasblase beaufschlagt wird schwingt er mit einer höheren Resonanzfrequenz als in einer Flüssigkeit. Bei einem strömenden zweiphasigen Fluid führt dies zu Fluktuationen der Resonanzfrequenz des Oszillators, so dass die Fluktuationen indiziell für eine Strömung des zweiphasigen Fluids sind.

Der vorliegenden Erfindung liegt die Aufgabe zugrunde, einen vibronischen Sensor und eine Messanordnung mit einem solchen Sensor bereitzustellen, die geeignet sind auch ein einphasiges strömendes Medium zu erkennen. Die Aufgabe wird gelöst durch den vibronischen Sensor gemäß dem unabhängigen Patentanspruch 1 und die Messanordnung gemäß dem Patentanspruch 8.

Der erfindungsgemäße vibronische Sensor zum Überwachen eines fließfähigen Mediums, umfasst:
einen Oszillator, der mit einem den Oszillator umgebenden Medium beaufschlagbar ist;
mindestens einen elektromechanischen Wandler zum Anregen des Oszillators zu mechanischen Schwingungen in Abhängigkeit von Treibersignalen, und zum Ausgeben von Wandlersignalen, welche von Schwingungen des Oszillators abhängen;
eine Betriebs- und Auswerteeinheit zum Bereitstellen der Treibersignale zum Treiben des elektromechanischen Wandlers, zum Erfassen von der Wandlersignale und zum Bestimmen des Vorhandenseins, der Dichte und / oder der Viskosität des Mediums in Abhängigkeit von den Wandlersignalen;
dadurch gekennzeichnet, dass die Betriebs- und Auswerteeinheit dazu eingerichtet ist, anhand von zeitlich veränderlichen Modifikationen der Wandlersignale aufgrund von Wirbelablösungen, zu erkennen, ob das Medium in der Rohrleitung eine Fließgeschwindigkeit oberhalb eines Grenzwerts aufweist;
wobei die zeitlich veränderlichen Modifikationen der Wandlersignale bei einer konstanten Fließgeschwindigkeit des Mediums oberhalb des Grenzwerts periodisch sind.

Der Erfindung liegt der Gedanke zugrunde, dass der Oszillator ein Strömungshindernis bildet, an welchem sich in einem strömenden Medium Wirbel ablösen, durch die das Schwingungsverhalten des Oszillators beeinflusst wird. Das Phänomen wird bereits bei Wirbelzählern genutzt, welche eine in erster Näherung geschwindigkeitsproportionale Ablösefrequenz der von Wirbeln an einem Strömungshindernis mittels eines passiven Paddels erfassen, das durch die Wirbel ausgelenkt wird. Ein Wirbelzähler ist beispielsweise in DE 10 2006 047 815 A1 beschrieben. Die Wirbelfrequenz beträgt für Flüssigkeiten je nach Strömungsgeschwindigkeit und geometrischen Gegebenheiten bis zu beispielsweise etwa 200 Hz. Die Amplitude der Druckschwankungen aufgrund der Wirbel ist in erster Näherung proportional zum Quadrat der Strömungsgeschwindigkeit. Mit zunehmender Durchflussgeschwindigkeit ist daher eine messbare Überlagerung der Resonatorschwingungen des Oszillators mit erzwungenen Schwingungen aufgrund der Wirbel zu erwarten.

In einer Weiterbildung der Erfindung weist der Oszillator eine Schwinggabel, ein Paddel oder einen Stab auf.

In einer Weiterbildung der Erfindung weist der Oszillator eine Resonanzfrequenz auf, welche von der Dichte des Mediums in der Rohrleitung abhängt, wobei der Grenzwert für die Fließgeschwindigkeit so gewählt ist, dass die Frequenz der periodischen Modifikationen bei einer Fließgeschwindigkeit, die dem Grenzwert entspricht, nicht mehr als ein Viertel, insbesondere nicht mehr als ein Achtel der Resonanzfrequenz des Oszillators beträgt.

In einer Weiterbildung der Erfindung ist die Betriebs- und Auswerteeinheit dazu eingerichtet, anhand der Wandlersignale mehrerer Schwingungsperioden des Oszillators, Werte für mindestens eine charakteristische Größe der Schwingungen des Oszillators zu ermitteln und eine statistische Analyse der Werte der mindestens einen charakteristischen Größe durchzuführen, um die Modifikationen der Wandlersignale zu erkennen, wobei die charakterische Größe ausgewählt ist aus einer Frequenz der Wandlersignale, einer Periode der Wandlersignale, einer Amplitude der Wandlersignale oder einer Phasenbeziehung zwischen den Treibersignalen und den Wandlersignalen.

In einer Weiterbildung der Erfindung umfasst die statistische Analyse, die Breite einer Verteilung der Werte der charakteristischen Größe zu bestimmen.

In einer Weiterbildung der Erfindung umfasst die statistische Analyse, die mittlere Abweichung zwischen aufeinander folgenden Werten der charakteristischen Größe zu bestimmen.

Die Betriebs- und Auswerteeinheit umfasst in einer Weiterbildung der Erfindung einen Mikroprozessor, welcher insbesondere dazu eingerichtet ist, die obigen statistischen Analysen an digitalisierten Wandersignalen durchzuführen, einen Durchfluss festzustellen und zu signalisieren, sowie ggf. einen zugehörigen Durchflussmesswert zu bestimmen, und auszugeben.

Die erfindungsgemäße Messanordnung umfasst einen erfindungsgemäßen vibronischen Sensor und eine Rohrleitung, wobei der vibronische Sensor, insbesondere der Oszillator des vibronischen Sensors in die Rohrleitung hineinragt.

In einer Weiterbildung der Erfindung weist die Rohrleitung eine Rohrleitungswand auf, wobei der vibronische Sensor durch einen Abschnitt der Rohrleitungswand und im Wesentlichen senkrecht zu diesem in die Rohrleitung hineinragt.

In einer Weiterbildung der Erfindung ist der Oszillator im Wesentlichen senkrecht zu dem Abschnitt der Rohrleitungswand anregbar.

In einer Weiterbildung der Erfindung ist der Oszillator im Wesentlichen senkrecht zur Längsachse des Messrohrs zu Schwingungen anregbar. In einer alternativen Weiterbildung der Erfindung ist der Oszillator im Wesentlichen parallel zur Längsachse des Messrohrs zu Schwingungen anregbar. Die Anregung in unterschiedlichen Richtungen führt zu unterschiedlichen Empfindlichkeiten gegenüber dem Durchfluss.

In einer Weiterbildung der Erfindung weist die Betriebs- und Auswerteeinheit einen Datenspeicher auf, in welchem ein Modell hinterlegt ist, das einen für die Messanordnung spezifischen Zusammenhang zwischen der Durchflussgeschwindigkeit und den zeitlich veränderlichen Modifikationen der Wandlersignale für mindestens ein Medium beschreibt.

Die Erfindung wird nun anhand der in den Zeichnungen dargestellten Ausführungsbeispiele näher erläutert. Es zeigt:
Fig.1: Eine schematische Darstellung eines ersten Ausführungsbeispiels einer erfindungsgemäßen Messanordnung;
Fig. 2a: Ein Detail des ersten Ausführungsbeispiels einer erfindungsgemäßen Messanordnung;
Fig. 2b: Ein Detail eines zweiten Ausführungsbeispiels einer erfindungsgemäßen Messanordnung;
Fig. 3: Eine Darstellung zum Auswertungsprinzip zum Feststellen und Bestimmen von Durchfluss; und
Fig. 4: Daten zur durchflussabhängigen Halbwertsbreite einer der Verteilung der Periodendauer.

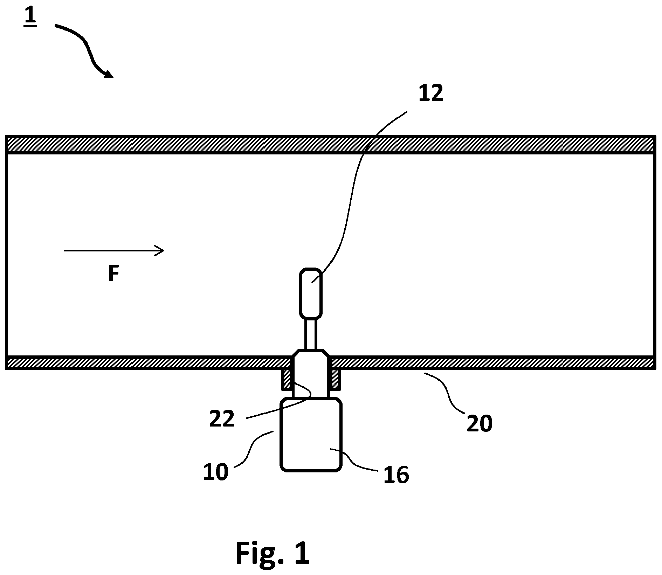

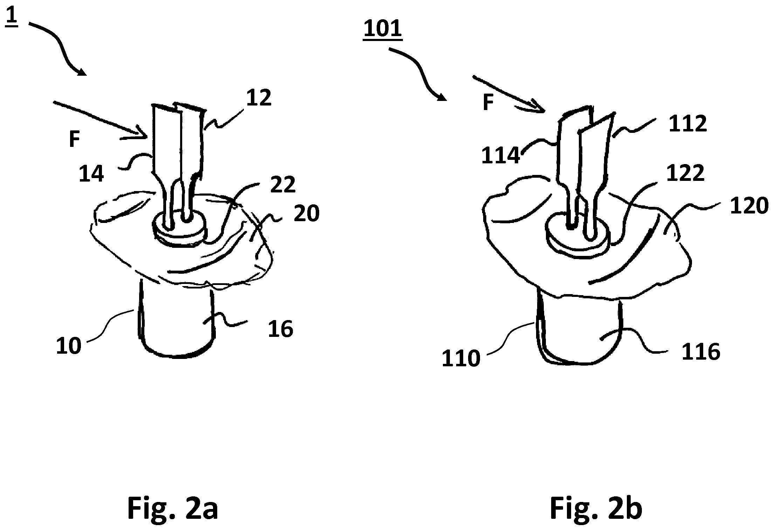

Das in Fign. 1 und 2a dargestellte Ausführungsbeispiel 1 einer erfindungsgemäßen Messanordnung umfasst einen vibronischen Sensor 10, der einen Oszillator mit zwei gegeneinander schwingenden Paddeln 12, 14 aufweist. Die Schwingungseigenschaften des Oszillators, sind insbesondere von der Dichte und der Viskosität eines den Oszillator umgebenden Mediums abhängig. Der vibronische Sensor umfasst weiterhin mindestens einen elektromechanischen Wandler, insbesondere einen piezoelektrischen Wandler zum Anregen von Schwingungen und zum Bereitstellen von schwingungsabhängigen Wandlersignalen. Zudem umfasst der vibronische Sensor eine Betriebs- und Auswertungseinheit, welche Treibersignale an den mindestens einen elektromechanischen Wandler zum Anregen der Schwingungen des Oszillators ausgibt, und welche die Wandlersignale erfasst und auswertet, um -je nach Einsatzbereich- Schwingungsabhängige Mess- und / oder Schaltsignale in analoger als Strom oder Spannungssignal oder in digitaler Form auszugeben. Die Die Betriebs- und Auswerteeinheit ist in einem Gehäuse 16 angeordnet. Die Messanordnung 1 umfasst weiterhin ein Messrohr 10, in welches die Paddel 12, 14 des Oszillators durch eine Rohrwandöffnung 22 hineinragen. Wie insbesondere in Fig. 2a dargestellt, weisen die Paddel 12, 14 Paddelflächen auf, die im Wesentlichen parallel zur Flussrichtung F bzw. zur Rohrachse verlaufen. Die Paddel 12,14 schwingen gegeneinander, also senkrecht zur Flussrichtung F.

Das in Fig. 2b dargestellte, zweite Ausführungsbeispiel 101 einer erfindungsgemäßen Messanordnung umfasst einen vibronischen Sensor 110, der einen Oszillator mit zwei gegeneinander schwingenden Paddeln 112, 114 aufweist. Die Schwingungseigenschaften des Oszillators, sind insbesondere von der Dichte und der Viskosität eines den Oszillator umgebenden Mediums abhängig. Der vibronische Sensor umfasst weiterhin mindestens einen elektromechanischen Wandler, insbesondere einen piezoelektrischen Wandler zum Anregen von Schwingungen und zum Bereitstellen von schwingungsabhängigen Wandlersignalen. Zudem umfasst der vibronische Sensor eine Betriebs- und Auswertungseinheit, welche Treibersignale an den mindestens einen elektromechanischen Wandler zum Anregen der Schwingungen des Oszillators ausgibt, und welche die Wandlersignale erfasst und auswertet, um - je nach Einsatzbereich - Schwingungsabhängige Mess- und / oder Schaltsignale in analoger als Strom oder Spannungssignal oder in digitaler Form auszugeben. Die Die Betriebs- und Auswerteeinheit ist in einem Gehäuse 116 angeordnet, sie enthält einen Mikroprozessor zur Durchführung von statistischen Analysen an digitalisierten Wandlersignalen. Die Messanordnung 101 umfasst weiterhin ein Messrohr 110, in welches die Paddel 112, 114 des Oszillators durch eine Rohrwandöffnung 122 hineinragen, wobei die Paddel 112, 114 Paddelflächen aufweisen, die im Wesentlichen orthogonal zur Flussrichtung F bzw. zur Rohrachse verlaufen. Die Paddel 112,114 schwingen gegeneinander, also parallel zur Flussrichtung F.

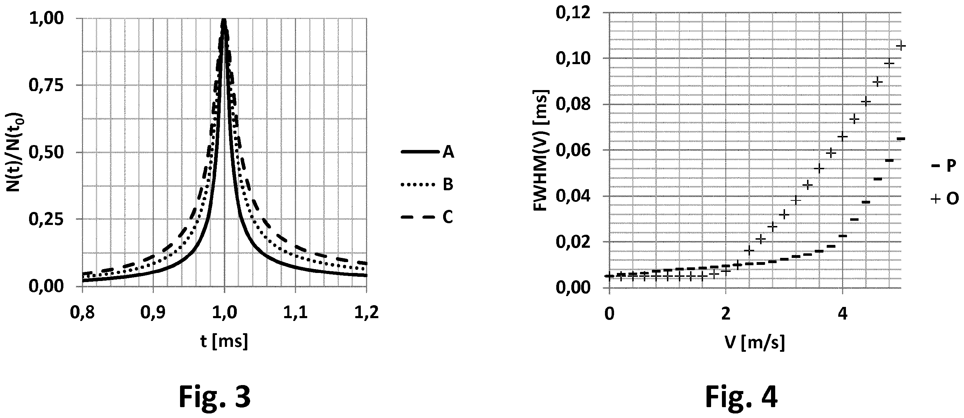

Die Vorgehensweise zum Erkennen bzw. Messen von Durchfluss wird nun anhand von Fig. 3 erläutert. Eine wesentliche Messgröße von vibronischen Sensoren ist die insbesondere von der Dichte des umgebenden Mediums abhängige Resonanzfrequenz des Oszillators. Eine typische Güte eines Oszillators in Wasser ist beipielsweise 70, so dass sich die Resonanzlinie sehr scharf ist. Wenn jedoch ein Medium durch das Messrohr strömt, kommt es zu den eingangs erwähnten Störungen aufgrund von Wirbelablösungen an den Paddeln 12, 14 des vibronischen Sensors. Die führt zu schwankenden Schwingungsperioden. Wenn nun über mehrere Schwingungsperioden die jeweilige Periodendauer erfasst wird, beispielsweise durch Erfassen der Zeitdifferenz zwischen Maxima der Wandlersignale, lässt sich anhand der Verteilung der Periodendauern feststellen, ob und ggf. mit welcher Geschwindigkeit das Medium fließt. Hierzu können die Periodendauern von beispielsweise 50 bis 100 Perioden erfasst werden, und deren relative Häufigkeit N(t)/N(t₀) wird bestimmt. Verteilungen hierzu sind in Fig. 3 dargestellt ist. Während die Kurve A die Verteilung bei ruhendem Medium zeigt, entsprechen die Kurven B und C den Verteilungen bei Durchflussgeschwindigkeiten von wenigen m/s. Die Halbwertsbreite (FWHM) bei N(t)/N(t₀) = 0,5, wobei t₀ die mittlere Periodendauer ist, nimmt mit steigender Durchflussgeschwindigkeit zu.

Fig. 4 stellt die Durchflussabhängigen Halbwertsbreiten als Funktion der Durchflussgeschwindigkeit für die Ausführungsbeispiele aus Fign. 2a und 2b dar. Die mit P gekennzeichneten Symbole entsprechen der Funktion für parallel zur Flussrichtung ausgerichtete Paddelflächen (Fig. 2a), während die mit O gekennzeichneten Symbole den Verlauf der Halbwertsbreite für orthogonal zur Flussrichtung angeordnete Paddelflächen (Fig. 2b) darstellen. Es zeigt sich, dass bei den Betrachteten Ausführungsbeispielen die parallele Ausrichtung bereits bei geringerem Durchfluss eine Zunahme der Halbwertsbreite erkennen lässt, während die orthogonale Ausrichtung erst ab einer Durchflussgeschwindigkeit von etwa 2 m/s eine deutlich erkennbare Verbreiterung zeigt, die dann aber mit wachsender Durchflussgeschwindigkeit stärker zunimmt als die Halbwertsbreite bei paralleler Ausrichtung der Paddelflächen.

Die genaue Beziehung zwischen Halbwertsbreite und Durchflussgeschwindigkeit hängt für einen gegebenen Vibronischen Sensor einerseits von den Medieneigenschaften, und andererseits von geometrischen Gegebenheiten der jeweiligen Messanordnung ab. Entsprechende spezifische Modellierungen, welche den Zusammenhang zwischen Halbwertsbreite der Verteilung der Periodendauer der Oszillatorschwingungen und der Durchflussgeschwindigkeit eines Mediums beschreiben.

## Patentansprüche

1. Vibronischer Sensor (10) zum Überwachen eines fließfähigen Mediums, umfassend:
einen Oszillator (12), der mit einem den Oszillator umgebenden Medium beaufschlagbar ist;
mindestens einen elektromechanischen Wandler zum Anregen des Oszillators (12) zu mechanischen Schwingungen in Abhängigkeit von Treibersignalen, und zum Ausgeben von Wandlersignalen, welche von Schwingungen des Oszillators abhängen;
eine Betriebs- und Auswerteeinheit (16) zum Bereitstellen der Treibersignale zum Treiben des elektromechanischen Wandlers, zum Erfassen der Wandlersignale und zum Bestimmen des Vorhandenseins, der Dichte und / oder der Viskosität des Mediums in Abhängigkeit von den Wandlersignalen;
**dadurch gekennzeichnet, dass** die Betriebs- und Auswerteeinheit (16) dazu eingerichtet ist, anhand von zeitlich veränderlichen Modifikationen der Wandlersignale aufgrund von Wirbelablösungen,
zu erkennen, ob das Medium in der Rohrleitung eine Fließgeschwindigkeit oberhalb eines Grenzwerts aufweist;
wobei die zeitlich veränderlichen Modifikationen der Wandlersignale bei einer konstanten Fließgeschwindigkeit des Mediums oberhalb des Grenzwerts periodisch sind.

2. Vibronischer Sensor (10) nach Anspruch 1, wobei der Oszillator eine Schwinggabel (12), ein Paddel oder einen Stab aufweist.

3. Vibronischer Sensor (10) nach Anspruch 1 oder 2, wobei der Oszillator (12) eine Resonanzfrequenz aufweist, welche von der Dichte des Mediums abhängt, wobei der Grenzwert für die Fließgeschwindigkeit so gewählt ist, dass die Frequenz der periodischen Modifikationen bei einer Fließgeschwindigkeit, die dem Grenzwert entspricht, nicht mehr als ein Viertel, insbesondere nicht mehr als ein Achtel der Resonanzfrequenz des Oszillators beträgt.

4. Vibronischer Sensor (10) nach einem der vorhergehenden Ansprüche, wobei die Auswerteeinheit dazu eingerichtet ist, anhand der Wandlersignale mehrerer Schwingungsperioden des Oszillators (12), Werte für mindestens eine charakteristische Größe der Schwingungen des Oszillators zu ermitteln und eine statistische Analyse der Werte der mindestens einen charakteristischen Größe durchzuführen, um die Modifikationen der Wandlersignale zu erkennen, wobei die charakterische Größe ausgewählt ist aus einer Frequenz der Wandlersignale, einer Periode der Wandlersignale, einer Amplitude der Wandlersignale oder einer Phasenbeziehung zwischen den Treibersignalen und den Wandlersignalen.

5. Vibronischer Sensor nach Anspruch 4, wobei die statistische Analyse umfasst, die Breite, insbesondere die Halbwertsbreite einer Verteilung der Werte der charakteristischen Größe zu bestimmen.

6. Vibronischer Sensor nach Anspruch 4, wobei die statistische Analyse umfasst, die mittlere Abweichung zwischen aufeinander folgenden Werten der charakteristischen Größe zu bestimmen.

7. Vibronischer Sensor nach einem der vorhergehenden Ansprüche, wobei die Betriebs- und Auswerteeinheit einen Mikroprozessor aufweist, welcher insbesondere dazu eingerichtet ist, die obigen statistischen Analysen an digitalisierten Wandersignalen durchzuführen, einen Durchfluss festzustellen und zu signalisieren, sowie ggf. einen zugehörigen Durchflussmesswert zu bestimmen, und auszugeben.

8. Messanordnung, umfassend: einen vibronischen Sensor nach einem der vorhergehenden Ansprüche; und
eine Rohrleitung, wobei der vibronische Sensor, insbesondere der Oszillator des vibronischen Sensors in die Rohrleitung hineinragt.

9. Messanordnung nach Anspruch 8, wobei die Rohrleitung eine Rohrleitungswand aufweist, wobei der vibronische Sensor durch einen Abschnitt der Rohrleitungswand und im Wesentlichen senkrecht zu diesem in die Rohrleitung hineinragt.

10. Messanordnung nach Anspruch 9, wobei der Oszillator im Wesentlichen senkrecht zu dem Abschnitt der Rohrleitungswand zu Schwingungen anregbar ist.

11. Messanordnung nach Anspruch 9 oder 10, wobei der Oszillator im Wesentlichen senkrecht zur Längsachse des Messrohrs zu Schwingungen anregbar ist.

12. Messanordnung nach Anspruch 9 oder 10, wobei der Oszillator im Wesentlichen parallel zur Längsachse des Messrohrs zu Schwingungen anregbar ist.

13. Messanordnung nach einem der Ansprüche 8 bis 12, wobei die Betriebs- und Auswerteeinheit einen Datenspeicher aufweist, in welchem ein Modell hinterlegt ist, das einen für die Messanordnung spezifischen Zusammenhang zwischen der Durchflussgeschwindigkeit und den zeitlich veränderlichen Modifikationen der Wandlersignale für mindestens ein Medium beschreibt.

## Claims

1. Vibronic sensor (10) designed to monitor a flowing medium, said sensor comprising:
an oscillator (12) which can be exposed to a medium surrounding the oscillator;
at least an electromechanical transducer designed to excite the oscillator (12) to perform mechanical oscillations depending on driver signals, and to output transducer signals that depend on oscillations of the oscillator;
an operating and evaluation unit (16) designed to provide driver signals to drive the electromechanical transducer, to measure the transducer signals and to determine the presence, the density and/or the viscosity of the medium depending on the transducer signals;
**characterized in that** the operating and evaluation unit (16) is designed to detect - on the basis of modifications of the transducer signals which are variable over time and caused by vortex shedding - whether the medium in the pipe has a flow velocity above a limit value;
wherein the modifications of the transducer signals which are variable over time are periodically above the limit value at a constant flow velocity of the medium.

2. Vibronic sensor (10) as claimed in Claim 1, wherein the oscillator comprises a tuning fork (12), a paddle or a rod.

3. Vibronic sensor (10) as claimed in Claim 1 or 2, wherein the oscillator (12) has a resonance frequency which depends on the density of the medium, wherein the limit value for the flow velocity is selected in such a way that the frequency of the periodic modifications at a flow velocity that corresponds to the limit value is not more than one quarter, particularly not more than one eighth, of the resonance frequency of the oscillator.

4. Vibronic sensor (10) as claimed in one of the previous claims, wherein, on the basis of the transducer signals of multiple oscillation periods of the oscillator (12), the evaluation unit is designed to determine values for at least one characteristic variable of the oscillations of the oscillator, and to perform a statistical analysis of the values of the at least one characteristic variable in order to detect the modifications of the transducer signals, wherein the characteristic variable is selected from a frequency of the transducer signals, a period of the transducer signals, an amplitude of the transducer signals or a phase relationship between the driver signals and the transducer signals.

5. Vibronic sensor (10) as claimed in Claim 4, wherein the statistical analysis comprises the determination of the width, particularly the full width at half maximum, of a distribution of the values of the characteristic variable.

6. Vibronic sensor (10) as claimed in Claim 4, wherein the statistical analysis comprises the determination of the average deviation between consecutive values of the characteristic variable.

7. Vibronic sensor (10) as claimed in one of the previous claims, wherein the operating and evaluation unit comprises a microprocessor, wherein said microprocessor is particularly designed to perform the aforementioned statistical analysis on digitalized transducer signals, to determine and signal a flow and, where applicable, to determine and output an associated flow measured value.

8. Measuring arrangement, comprising: a vibronic sensor as claimed in one of the previous claims; and
a pipe, wherein the vibronic sensor, particularly the oscillator of the vibronic sensor, projects into the pipe.

9. Measuring arrangement as claimed in Claim 8, wherein the pipe comprises a pipe wall, wherein the vibronic sensor extends into the pipe through a section of the pipe wall and is essentially perpendicular to said section.

10. Measuring arrangement as claimed in Claim 9, wherein the oscillator can be excited to produce oscillations essentially perpendicular to the section of the pipe wall.

11. Measuring arrangement as claimed in Claim 9 or 10, wherein the oscillator can be excited to produce oscillations essentially perpendicular to the longitudinal axis of the measuring tube.

12. Measuring arrangement as claimed in Claim 9 or 10, wherein the oscillator can be excited to produce oscillations essentially parallel to the longitudinal axis of the measuring tube.

13. Measuring arrangement as claimed in one of the Claims 8 to 12, wherein the operating and evaluation unit comprises a data memory in which a model is saved which describes a relationship, specific for the measuring arrangement, between the flow velocity and the modifications, which are variable over time, of the transducer signals for at least one medium.

## Revendications

1. Capteur vibronique (10) destiné à la surveillance d'un produit apte à s'écouler, lequel capteur comprend :
un oscillateur (12) sur lequel peut agir un produit entourant l'oscillateur ;
au moins un transducteur électromécanique destiné à exciter l'oscillateur (12) en oscillations mécaniques en réponse à des signaux de commande, et à émettre des signaux de transducteur qui dépendent des oscillations de l'oscillateur ;
une unité de commande et d'exploitation (16) conçue pour fournir les signaux de commande destinés à commander le transducteur électromécanique, pour mesurer les signaux de transducteur et pour déterminer la présence, la densité et/ou la viscosité du produit en fonction des signaux de transducteur ;
**caractérisé en ce que** l'unité de commande et d'exploitation (16) est conçue pour détecter, sur la base de modifications variables dans le temps des signaux de transducteur dues au détachement des tourbillons, si le produit dans la conduite présente une vitesse d'écoulement supérieure à une valeur limite ;
les modifications variables dans le temps des signaux de transducteur étant périodiques lorsque la vitesse d'écoulement du produit au-delà de la valeur limite est constante.

2. Capteur vibronique (10) selon la revendication 1, pour lequel l'oscillateur comprend une fourche vibrante (12), une palette ou une tige.

3. Capteur vibronique (10) selon la revendication 1 ou 2, pour lequel l'oscillateur (12) présente une fréquence de résonance qui dépend de la densité du produit, la valeur limite pour la vitesse d'écoulement étant choisie de telle sorte que la fréquence des modifications périodiques à une vitesse d'écoulement, qui correspond à la valeur limite, ne soit pas supérieure à un quart, notamment pas supérieure à un huitième, de la fréquence de résonance de l'oscillateur.

4. Capteur vibronique (10) selon l'une des revendications précédentes, pour lequel l'unité d'exploitation est conçue pour déterminer, sur la base des signaux de transducteur de plusieurs périodes d'oscillation de l'oscillateur (12), des valeurs pour au moins une grandeur caractéristique des oscillations de l'oscillateur, et pour effectuer une analyse statistique des valeurs de l'au moins une grandeur caractéristique, pour détecter les modifications des signaux de transducteur, la grandeur caractéristique étant choisie parmi une fréquence des signaux de transducteur, une période des signaux de transducteur, une amplitude des signaux de transducteur ou une relation de phase entre les signaux de commande et les signaux de transducteur.

5. Capteur vibronique (10) selon la revendication 4, pour lequel l'analyse statistique comprend la détermination de la largeur, notamment la demi-largeur, d'une distribution des valeurs de la grandeur caractéristique.

6. Capteur vibronique (10) selon la revendication 4, pour lequel l'analyse statistique comprend la détermination de l'écart moyen entre des valeurs successives de la grandeur caractéristique.

7. Capteur vibronique (10) selon l'une des revendications précédentes, pour lequel l'unité de commande et d'exploitation comprend un microprocesseur, lequel microprocesseur est notamment conçu pour effectuer les analyses statistiques ci-dessus sur des signaux de transducteur numérisés, pour déterminer et signaler un débit ainsi que, le cas échéant, pour déterminer et émettre une valeur mesurée de débit associée.

8. Arrangement de mesure, comprenant : un capteur vibronique selon l'une des revendications précédentes ; et
une conduite, le capteur vibronique, notamment l'oscillateur du capteur vibronique, s'étendant dans la conduite.

9. Arrangement de mesure selon la revendication 8, pour lequel la conduite comprend une paroi de conduite, le capteur vibronique s'étendant dans la conduite à travers une partie de la paroi de conduite et pour l'essentiel perpendiculairement à celle-ci.

10. Arrangement de mesure selon la revendication 9, pour lequel l'oscillateur peut être excité en oscillations pour l'essentiel perpendiculairement à la partie de la paroi de conduite.

11. Arrangement de mesure selon la revendication 9 ou 10, pour lequel l'oscillateur peut être excité en oscillations pour l'essentiel perpendiculairement à l'axe longitudinal du tube de mesure.

12. Arrangement de mesure selon la revendication 9 ou 10, pour lequel l'oscillateur peut être excité en oscillations pour l'essentiel parallèlement à l'axe longitudinal du tube de mesure.

13. Arrangement de mesure selon l'une des revendications 8 à 12, pour lequel l'unité de commande et d'exploitation comprend une mémoire de données dans laquelle est stocké un modèle qui décrit une relation spécifique à l'arrangement de mesure entre la vitesse d'écoulement et les modifications variables dans le temps des signaux de transducteur pour au moins un produit.
